## Europäisches Patentamt

## European Patent Office

## Office européen des brevets

(19)

(11) Veröffentlichungsnummer: **0 148 741**
**B1**

(12)

# EUROPÄISCHE PATENTSCHRIFT

(45) Veröffentlichungstag der Patentschrift:
04.11.87

(21) Anmeldenummer: 84890150.0

(22) Anmeldetag: 09.08.84

(51) Int. Cl.⁴: **B 01 D 53/34, F 23 J 15/00**

(54) Verfahren und Vorrichtung zur thermischen Behandlung von Rauchgasen aus einem Kesselsystem.

(30) Priorität: 27.10.83 AT 3821/83

(43) Veröffentlichungstag der Anmeldung:
17.07.85 Patentblatt 85/29

(45) Bekanntmachung des Hinweises auf die Patenterteilung:
04.11.87 Patentblatt 87/45

(84) Benannte Vertragsstaaten:
AT BE CH DE FR GB IT LI LU NL SE

(56) Entgegenhaltungen:
DE-A-2 733 029
FR-A-1 420 983

PATENT ABSTRACTS OF JAPAN, Band 6, Nr. 19, 3. Februar 1982 (C-90) (897)

(73) Patentinhaber: SIMMERING- GRAZ- PAUKER AKTIENGESELLSCHAFT, Brehmstrasse 16, A-1110 Wien (AT)

(72) Erfinder: Rabitsch, Hermann, Dipl.- Ing. Dr. techn., Gotenweg 3, A-1220 Wien (AT)
Erfinder: Stubenvoll, Josef, Dipl.- Ing., Laaerstrasse 1, A-2170 Poysdorf (AT)
Erfinder: Mutzl, Josef, Dipl.- Ing., Kleine Pfarrgasse 20/10, A-1020 Wien (AT)

(74) Vertreter: Köhler- Pavlik, Johann, Dipl.- Ing., Margaretenplatz 5, A-1050 Wien (AT)

EP 0 148 741 B1

## Beschreibung

Die Erfindung betrifft ein Verfahren und eine Vorrichtung zur thermischen Behandlung von Rauchgasen aus einem Kesselsystem, die durch zwei in Serie geschaltete Rauchgasnachbehandlungsanlagen geführt werden, wobei die Rauchgastemperatur in der zweiten Rauchgasnachbehandlungsanlage, die eine DeNOx-Anlage ist, höher als jene in der ersten ist und zur thermischen Behandlung von der dem Kesselsystem zugeführten Verbrennungsluft.

Unter Rauchgasnachbehandlungsanlagen werden Anlagen zur Schadstoffminderung im Rauchgasstrom verstanden. Die erste Rauchgasnachbehandlungsanlage kann beispielsweise eine Rauchgasentschwefelungsanlage sein.

Die in den Rauchgasen von Kesselanlagen enthaltenen Stickoxide stellen eine Umweltbelastung dar, wenn diese ungehindert in die Atmosphäre austreten. Um diese Belastung zu senken, wurden sogenannte DeNOx-Anlagen entwickelt, die eine Verminderung der NOx-Anteile der Rauchgase bewirken. Im allgemeinen sind DeNOx-Anlagen als katalytisch wirkende Anlagen zur Verminderung des Gehaltes an Stickoxiden (NOx) vorgesehen, die auch als SCR-Anlagen (selective catalytic reduction) bezeichnet werden und bei kalorischen Kraftwerken vor dem Luftvorwärmer angeordnet sind, u.zw. deshalb, weil die Wirkung der DeNOx-Anlagen bei den dort herrschenden Temperaturen am günstigsten ist.

Die Wirkungsweise des SCR-Verfahrens beruht auf der Reaktion der Stickoxide mit in die Rauchgase eingebrachtem $NH_3$ unter Anwesenheit eines Katalysators. Bei mit Kohle oder Öl beheizten Kraftwerken kann eine Reihe von Problemen auftreten.

Abhängig von der Zusammensetzung der Brennstoffe wird bereits ein Teil des im Brennstoff enthaltenen Schwefels zu $SO_3$ umgesetzt.

Außerdem ist die Wirkungsweise des Katalysators nicht nur auf die Umsetzung zwischen $NH_3$ und NOx begrenzt, es erfolgt auch eine Katalyse von $SO_2$ zu $SO_3$. Das in den Rauchgasstrom eingebrachte $NH_3$ reagiert mit $SO_3$ zu verschiedenen Salzen, die sich bei Temperaturen unter ca. 250°C, besonders unter 230°C, in flüssiger Form vor allem im Luftvorwärmer zusätzlich mit anklebenden Ascheteilen ablagern und zu Verstopfungen und Druckabfällen führen können. Ein geringes Ausmaß an Abscheidung kann auch am Katalysator selbst erfolgen und zu einer Desaktivierung führen.

Die Flugasche kann eine Erosion des Katalysators bis zu einer kritischen Schwächung seiner mechanischen Stabilität bewirken. Außerdem kann es durch die Flugasche zu Verstopfungen des wabenförmig ausgebildeten Katalysators kommen. Des weiteren besteht die Gefahr der langsamen Vergiftung des Katalysators durch alkalische Aschebestandteilchen, besonders durch Kaliumverbindungen.

Um Verstopfungen des Katalysators zu vermeiden wurden Katalysatoren auf keramischer Basis entwickelt, die voluminös, schwer und auf mechanische Beanspruchung empfindlich sind. Außerdem sind Rußbläser vorzusehen, um die Katalysatoren zyklisch zu reinigen.

Vanadiumpentoxyd ist einer der effektivsten NOx-Katalysatoren, hat aber den Nachteil einer gleichfalls erhöhten aktivität in Hinblick auf eine $SO_3$-Umwandlung. Es sind Katalysatoren bekannt, die weniger als 1 % des $SO_2$ zu $SO_3$ umwandeln, dies aber auf Kosten einer gleichfalls verminderten NOx-Aktivität.

Um diese Probleme zu umgehen wurde bereits vorgeschlagen, die DeNOx-Anlage nach der dem Luftvorwärmer nachgeschalteten Rauchgasentschwefelungsanlage anzuordnen. Die aus der Rauchgasentschwefelungsanlage austretenden Reingase weisen jedoch eine relativ niedrige Temperatur auf, weshalb diese wieder auf die für eine DeNOx-Anlage erforderliche Reaktionstemperatur gebracht werden müssen. Zu diesem Zwecke kann beispielsweise ein mit Dampf beschickter Wärmetauscher vorgesehen sein. Diese Art von Wiederaufheizung ist jedoch mit zusätzlichem Energieaufwand und damit mit erhöhten Betriebskosten verbunden.

Aufgabe der Erfindung ist die Schaffung eines Verfahrens und einer Vorrichtung zur thermischen Behandlung von Rauchgasen aus einem Kesselsystem, die durch zwei in Serie geschaltete Rauchgasnachbehandlungsanlagen geführt werden, wobei die Rauchgastemperatur in der zweiten Rauchgasnachbehandlungsanlage, die eine DeNox-Anlage ist, höher als jene in der ersten ist, und von der dem Kesselsystem zugeführten Verbrennungsluft, ohne daß eine externe Energiezufuhr notwendig ist, oder daß nur eine minimale externe Energiezufuhr erforderlich ist.

Das Verfahren der eingangs genannten Art ist erfindungsgemäß dadurch gekennzeichnet, daß Wärme der Rauchgase zur Wiederaufheizung der Rauchgase und zur Luftvorwärmung verwendet wird.

In Ausgestaltung der Erfindung ist vorgesehen, daß die Wiederaufheizung der Rauchgase bis auf eine für ein katalytisches DeNOx-Verfahren notwendige Temperatur erfolgt, vorzugsweise im Bereich von 130° bis 450°C, zweckmäßig 160° bis 380°C, beispielsweise 200° bis 300°C.

Die Wiederaufheizung der Rauchgase erfolgt erfindungsgemäß in mehr als einer Stufe, vorzugsweise in zwei oder drei Stufen.

Erfindungsgemäß ist auch vorgesehen, daß die Luftvorwärmung in mehr als einer Stufe erfolgt, vorzugsweise in zwei oder drei Stufen.

Des weiteren wird erfindungsgemäß Wärme der Rauchgase zuerst bei hohem Temperaturniveau zur Luftvorwärmung in der letzten Stufe der Luftvorwärmung verwendet, und danach mit Wärme der Rauchgase bei niedrigerem Temperaturniveau die Wiederaufheizung der Rauchgase durchgeführt. Dadurch wird erreicht, daß einerseits die Verbrennungsluft optimal bei hohem Temperaturniveau erhitzt und anderseite das Temperaturniveau zur Wiederaufheizung der Reingase vor dem DeNOx-Vorgang noch genügend hoch ist.

In weiterer Ausgestaltung der Erfindung ist vorgesehen, daß zur Vorwärmung der Verbrennungaluft in der ersten Stufe der Luftvorwärmung Wärme der Rauchgase bei niedrigem Temperaturniveau verwendet wird, nachdem den Rauchgasen bereite Wärme bei hohem Temperaturniveau zur Luftvorwärmung und zur Wiederaufheizung der Rauchgase entzogen wurde. Die Übertragung dieser Wärme kann regenerativ z. B. durch einen Dreh-Gasvorwärmer oder umschaltbare Regenerationskolonnen, oder rekuperativ durch ein Wärmetauschersystem mit dazwischengeschaltetem Wärmeträgermediumkreislauf oder eine Anordnung von Heat-pipes erfolgen, wodurch sich eine bessere Ausnützung des Wärmeinhalts der Rauchgase vor der Rauchgasnachbehandlungsanlage ergibt. Im Falle einer Rauchgasentschwefelungsanlage als Rauchgasnachbehandlungsanlage ergibt sich außerdem eine Verringerung des Wasserverbrauchs der Rauchgasentschwefelungsanlage zufolge geringerer Verdunstung und damit auch ein geringerer Feuchtegehalt der Reingase.

Vorzugsweise erfolgt die Wiederaufwärmung der Rauchgase bis einschließlich zur vorletzten Stufe der Wiederaufheizung der Rauchgase durch ein Absorptionssystem.

Gemäß einem weiteren Merkmal der Erfindung erfolgt die Wiederaufheizung der Rauchgase bis einschließlich der vorletzten Stufe der Wiederaufheizung der Rauchgase durch Wärmetausch in einem Regenerationssystem zwischen den in die erste Rauchgasnachbehandlungsanlage ein- und austretenden Rauchgasen. Vorzugsweise erfolgt die Wiederaufheizung der Rauchgase bis einschließlich der vorletzten Stufe der Wiederaufheizung der Rauchgase in einem Rekuperativsystem mit Dampf. Eine zusätzliche Ausgestaltung der Erfindung sieht vor, daß die Luftvorwärmung bis einschließlich der vorletzten Stufe der Luftvorwärmung durch Aufnahme der in einem Absorptionssystem freiwerdenden Wärme und/oder durch Wärmetausch mit den aus der zweiten Rauchgasnachbehandlungsanlage austretenden Rauchgasen erfolgt.

Eine erste Vorrichtung zur Durchführung des erfindungsgemäßen Verfahrens ist dadurch gekennzeichnet, daß im Anschluß an einen Kessel für die austretenden heißen Rauchgase vor dem Eintritt in die erste Rauchgasnachbehandlungsanlage ein erster Wärmetauscher vorgesehen ist, dessen Sekundärkreislauf einerseits mit dem Primärkreislauf eines zweiten Wärmetauschers verbunden ist, welcher zur Wiederaufheizung der aus der ersten Rauchgasnachbehandlungsanlage austretenden Reingase vorgesehen und zwischen der ersten und der zweiten Rauchgasnachbehandlungsanlage angeordnet und anderseits mit dem Primärkreislauf eines dritten Wärmetauschers zur Luftvorwärmung verbunden ist. Die Wärmeübertragung kann auch durch eine Anordnung von Heat-pipes erfolgen.

Eine zweite Vorrichtung zur Durchführung des erfindungsgemäßen Verfahrens ist dadurch gekennzeichnet, daß im Anschluß an einen Kessel für die austretenden heißen Rauchgase vor dem Eintritt in die erste Rauchgasnachbehandlungsanlage ein Regenerativsystem vorgesehen ist, und daß der Ausgang der ersten Rauchgasnachbehandlungsanlage über das Regenerativsystem mit einer DeNOx-Anlage verbunden ist, an deren Ausgang ein Luftvorwärmer angeschlossen ist, der durch die aus der DeNOx-Anlage austretenden Reingase beheizt wird. Vorzugsweise ist zwischen der ersten Rauchgasnachbehandlungsanlage und dem Regenerativsystem ein Gasvorwärmer angeordnet.

Eine Ausgestaltung dieser Vorrichtung sieht vor, daß zwischen dem ersten Wärmetauscher und der ersten Rauchgasnachbehandlungsanlage ein vierter Wärmetauscher angeordnet ist, dessen Sekundärkreislauf mit dem Primärkreislauf eines fünften Wärmetauschers zur Luftvorwärmung verbunden ist, und daß ein Luftvorwärmer zur Zwischenerwärmung der Verbrennungsluft zwischen dem dritten Wärmetauscher und dem fünften Wärmetauscher angeordnet ist, welcher mit dem Ausgang einer DeNOx-Anlage verbunden ist und durch die aus der DeNOx-Anlage austretenden Reingase beheizt wird.

Eine zusätzliche Vorrichtung der Erfindung ist dadurch gekennzeichnet, daß im Anschluß an einen Kessel für die austretenden heißen Rauchgase vor dem Eintritt in die erste Rauchgasnachbehandlungsanlage zumindest ein Wärmetauschersystem für die Lufterwärmung und zumindest ein Wärmetauschersystem für die Rauchgaswiederaufheizung vorgesehen ist, und daß der Ausgang der ersten Rauchgasnachbehandlungsanlage mit einer DeNOx-Anlage verbunden ist, an deren Ausgang ein Luftvorwärmer angeschlossen ist, der durch die aus der DeNOx-Anlage austretenden Reingase erhitzt wird.

Durch das erfindungsgemäße Verfahren und die erfindungsgemäßen Vorrichtungen können eine Reihe von Vorteilen erzielt werden. Wie bei gasbeheizten Kraftwerken (Abwesenheit von Asche und $SO_2$) kann ein Katalysator gewählt werden, der optimale Oberfläche, Gewicht und Wirksubstanz, die sich nur an der Oberfläche befindet, aufweist, wodurch sich der Herstellungsaufwand in starken Maße reduziert. Die Problematik einer Verunreinigung oder Desaktivierung des Katalysators wird daher auf ein vernachlässigbares Minimum beschränkt, so daß dessen Lebensdauer wesentlich verlängert wird. Weiters ist eine $NH_3$-Freiheit der Flugasche, eines Rauchgasentschwefelungsanlagen-Endproduktes (z. B. Gips) oder eines Abwassers aus einer Rauchgasentschwefelungsanlage gewährleistet.

Weitere Merkmale, Einzelheiten und Vorteile der Erfindung werden anschließend an Hand der Figuren näher erläutert, welche bevorzugte Ausführungsbeispiele darstellen.

Es zeigen

Fig. 1 ein Blockschema eines ersten Ausführungsbeispiels,

Fig. 2 ein Blookschema eines zweiten Ausführungsbeispiels,

Fig. 3 ein Blockschema eines dritten Ausführungsbeispiels, und

Fig. 4 und 5 zwei weitere Varianten erfindungsgemäßer Anlagen zur Wiederaufheizung von Reingasen, wobei gleiche Blockeinheiten mit gleichen Bezugszeichen versehen sind.

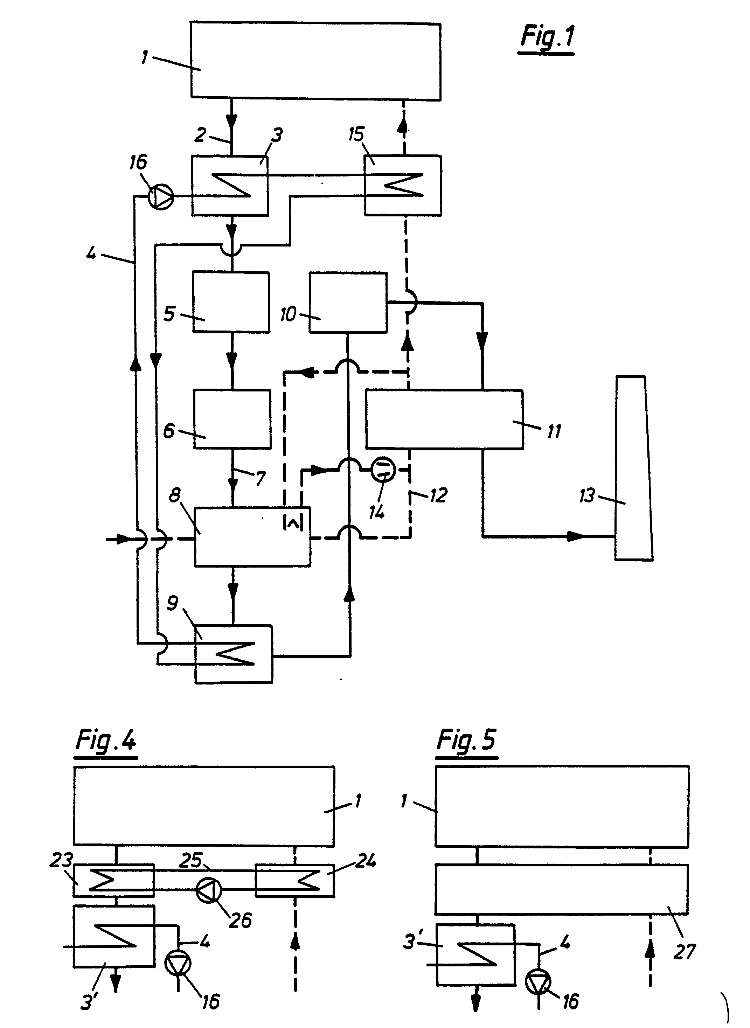

In Fig. 1 bezeichnet 1 einen Kessel, aus dem die heißen Rauchgase 2 austreten und in einen Wärmetauscher 3 eintreten. Der Sekundärkreislauf des Wärmetauschers 3 ist mit einem hitzebeständigen Wärmeträgermedium 4, z. B. Öl gefüllt. Nach dem Wärmetauscher 3 gelangen die Rauchgase 2 falls erforderlich über ein E-Filter 5 zu einer Rauchgasnachbehandlungsanlage, die beispielsweise als Rauchgasentschwefelungsanlage 6 ausgeführt ist. Die abgekühlten Reingase 7 werden anschließend in einem Wasserdampf-Absorptionssystem 8 auf 90 bis 110°C vorerwärmt, welches in einer nicht vorveröffentlichten Literaturstelle beschrieben wird AT-A-380 092, publiziert am 10.4.86. Die Enderwärmung der Reingase findet in einem Wärmetauscher 9 statt, dessen Primärkreislauf mit dem Sekundärkreislauf des Wärmetauschers 3 verbunden ist. Die wiedererhitzten Reingase 7 werden einer DeNOx-Anlage 10 zugeführt. Das aus der DeNOx-Anlage 10 austretende Reingas gibt einen Teil seiner Wärme in einem regenerativen Luftvorwärmer 11 an die Verbrennungsluft 12 ab, die zuvor im Absorptionssystem 8 vorerwärmt wurde, und tritt anschließend über einen Schornstein 13 in die Atmosphäre. Nach dem Luftvorwärmer 11 wird ein Teilstrom der Verbrennungsluft 12 dem Absorptionssystem 8 zugeführt, um die notwendige Energie für den Desorptionsvorgang zu liefern.

Der aus dem Absorptionssystem 8 austretende und abgekühlte Luftstrom wird über ein Gebläse 14 wieder der Verbrennungsluft 12 vor dem Luftvorwärmer 11 beigemengt. Die Enderwärmung der Verbrennungsluft 12 erfolgt in einem Wärmetauscher 15, dessen Primärkreislauf mit dem Sekundärkreislauf des Wärmetauschers 3 in Serie geschaltet ist. Vor der Eintrittsstelle des Wärmeträgermediums 4 in den Wärmetauscher 3 ist eine Pumpe 16 angeordnet, um die Zirkulation des Wärmeträgermediums vom Wärmetauscher 3 über den Wärmetauscher 15 zum Wärmetauscher 9 zu bewerkstelligen.

Bei entsprechender Dimensionierung der Wärmetauscher 3 und 9 bzw. bei entsprechendem Wärmeinhalt der heißen Rauchgase kann das Absorptionssystem 8 nach Fig. 1 unter Umständen entfallen, d.h. daß die Wiederaufheizung der aus der Rauchgasentschwefelungsanlage 6 austretenden Reingase nur durch den Wärmetauscher 9 erfolgt. Die für die DeNOx-Anlage erforderliche Temperatur der Reingase beträgt vorzugsweise 130° bis 450°C, zweckmäßig 160° bis 380°C, z. B. 200° bis 300°C.

Im folgenden werden zum besseren Verständnis die Temperaturverhältnisse an den verschiedenen Ein- und Austrittsstellen der Rauchgase, des Wärmeträgermediums Öl und der Verbrennungsluft beispielhaft angeführt.

Die heißen Rauchgase 2 treten beispielsweise mit einer Temperatur von 370°C aus dem Kessel 1 aus und erwärmen das Öl 4 im Wärmetauscher 3 von einer Eintrittstemperatur von 130°C auf 350°C. Die Rauchgase 2 verlassen den Wärmetauscher 3 mit einer Temperatur von 150°C und treten in die Rauchgasentschwefelungsanlage 6 ein, welche sie mit einer Temperatur von 60°C wieder verlassen. Im Wasserdampf-Absorptionssystem 8 werden die abgekühlten Reingase 7 auf ca. 110°C erhitzt.

Das im Wärmetauscher 3 erhitzte Öl 4 gelangt zuerst zum Wärmetauscher 15, wo es zur Endaufheizung der Verbrennungsluft auf ca. 325°C verwendet wird. Das Öl 4 verläßt den Wärmetauscher 15 mit einer Temperatur von 320°C, mit welcher es zum Wärmetauscher 9 geleitet wird, um die aus dem Wasserdampf-Absorptionssystem austretenden Reingase 7 auf eine Temperatur von 300°C zu erhitzen, mit der sie zur DeNOx-Anlage 10 gelangen. Das Öl 4 verläßt den Wärmetauscher 9 mit einer Temperatur von 130°C, mit der es über die Pumpe 16 wieder zum Wärmetauscher 3 geleitet wird.

Die Verbrennungsluft 12 wird durch die bei der Wasserdampf-Absorption freiwerdende Wärme auf ca. 90°C vorerwärmt, im Luftvorwärmer 11 auf 270°C zwischenerhitzt und im Wärmetauscher 15 auf die Endtemperatur von 325°C gebracht.

Die Reingase 7 verlassen die DeNOx-Anlage mit einer Temperatur von ca. 300°C, mit der sie in den Luftvorwärmer 11 eintreten und diesen mit einer Temperatur von 130°C über den Schornstein verlassen. Diese hohe Austrittstemperatur gewährleistet eine sehr gute Ausbreitung der nur noch in geringem Maße im Rauchgas enthaltenen Schadstoffe.

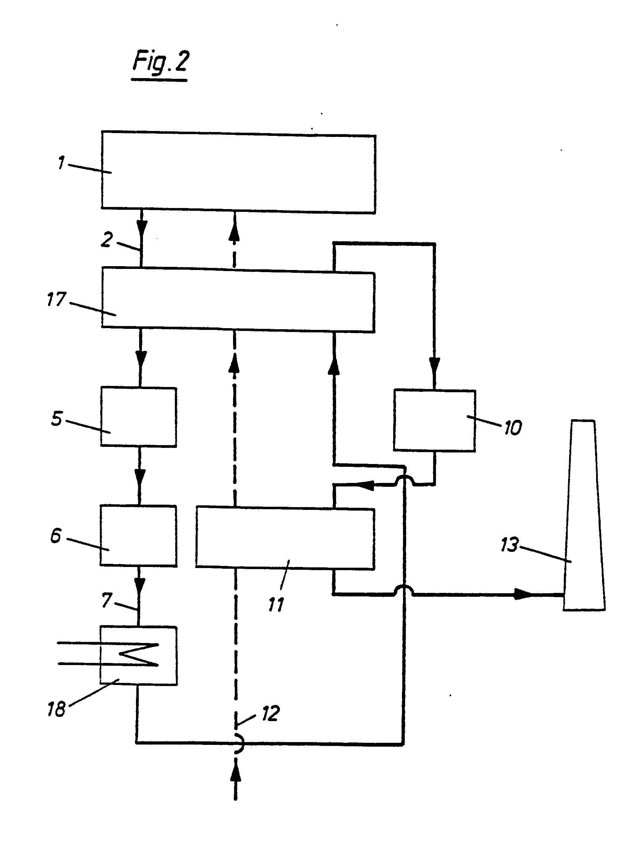

Das in Fig. 2 dargestellte System ist dem nach Fig. 1 weitgehend ähnlich. Anstelle der Wärmetauscher 3, 9 und 15 ist ein Regenerativsystem 17 mit drei Kammern vorgesehen, das z. B. als Dreikammer-Ljungströmgasvorwärmer ausgebildet sein kann. Wesentlich für die Rauchgas- und Luftführung ist, daß die zeitliche Reihenfolge für die Durchströmung eingehalten wird: Rauchgas aus dem Kessel, Verbrennungsluft, Rauchgas vor der DeNOx-Anlage. Durch diese Reihenfolge wird sowohl die Temperaturabstufung der Gasströme gewährleistet, als auch der Leckstrom von Rohgas zur Reingasseite vernachlässigbar klein.

Anstelle des Absorptionssystems 8 nach Fig. 1 wird hier ein mit z. B. Turbinenabzapfdampf betriebener Gasvorwärmer 18 eingesetzt. Dieser Gasvorwärmer 18 könnte auch durch einen herkömmlichen Dreh-Gasvorwärmer oder ein sonstiges Regenerativsystem ersetzt werden, bei welchem ein Wärmetausch zwischen den in die Rauchgasentschwefelungsanlage 6 ein- bzw. austretenden Rauchgasen erfolgt. Auch bei diesem Ausführungsbeispiel kann unter Umständen bei entsprechender Dimensionierung des Regenerativsystems 17 bzw. bei entsprechendem Wärmeinhalt der heißen Rauchgase der Gasvorwärmer 18 entfallen.

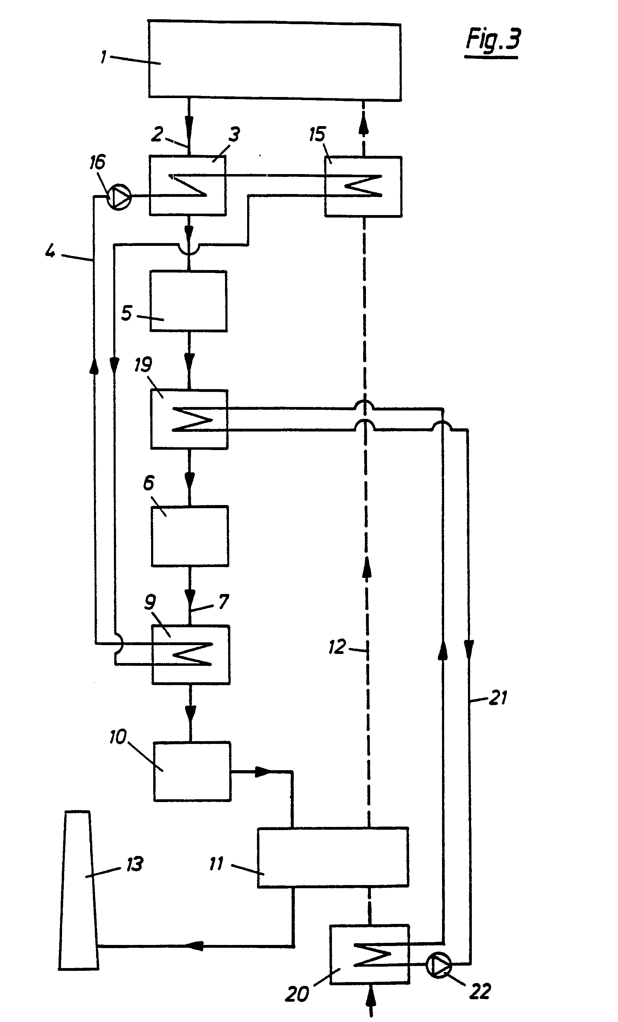

Die in Fig. 3 dargestellte Anordnung gleicht ebenfalls im wesentlichen jener der Fig. 1, wobei das Absorptionssystem 8 entfällt und ein Wärmetauschersysten vorgesehen ist, bestehend aus einem rauchgasseitigen Wärmetauscher 19 vor der Rauchgasentschwefelungsanlage 6 und einem verbrennungsluftseitigen Wärmetauscher 20 vor dem Luftvorwärmer 11, welche über einen Wärmeträgermediumkreislauf 21 mit einer Pumpe 22 miteinander verbunden sind.

Bei den Ausführungsbeispielen nach Fig. 1, 2 und 3 ist die DeNOx-Anlage 10 separat zwischen Wärmetauscher 9 beziehungsweise Regenerativsystem 17 und Luftvorwärmer 11 angeordnet. Es wäre jedoch auch erfindungsgemäß möglich, die DeNOx-Anlage sowohl im Wärmetauscher 9 als auch im Luftvorwärmer 11 zu integrieren, indem man die Wärmetauschflächen als Katalysator ausbildet.

Bei den Beispielen nach Fig. 4 und 5 sind nur die unmittelbar am Kessel 1 angeschlossenen Wärmetauschersysteme dargestellt. Die restlichen Blockeinheiten können ähnlich wie in Fig. 1 oder Fig. 3 dargestellt ausgebildet bzw. miteinander verbunden sein.

Nach Fig. 4 ist ein rekuperatives Wärmetauschersystem in Form eines rauchgasseitigen Wärmetauschers 23 und eines verbrennungsluftseitigen Wärmetauschers 24 vorgesehen, welche über einen Wärmeträgermediumkreislauf 25 mit einer Pumpe 26 miteinander verbunden sind. Die beiden Wärmetauscher 23 und 3' entsprechen dem Wärmetauscher 3 nach Fig. 1. Der Wärmetauscher 3' ist dementsprechend mit dem Wärmetauscher 9 nach Fig. 1 verbunden.

Nach Fig. 5 ist ein regeneratives Wärmetauschersystem in Form eines Dreh-Luftvorwärmers 27 vorgesehen, an welchem rauchgasseitig wieder ein Wärmetauscher 3' angeschloseen und mit dem Wärmetauscher 9 nach Fig. 1 verbunden ist. Anstelle des rekuperativen Wärmetauschersystems, bestehend aus den Wärmetauschern 3' und 9, kann auch ein regeneratives Wärmetauschersystem z. B. ein Dreh-Gasvorwärmer eingesetzt werden.

**Patentansprüche**

1. Verfahren zur thermiechen Behandlung von Rauchgasen aus einem Kesselsystem, die durch zwei in Serie geschaltete Rauchgasnachbehandlungsanlagen geführt werden, wobei die Rauchgastemperatur in der zweiten Rauchgasnachbehandlungsanlage, die eine DeNox-Anlage ist, höher als jene in der ersten ist und zur thermischen Behandlung von der dem Kesselsystem zugeführten Verbrennungsluft, dadurch gekennzeichnet, daß Wärme der Rauchgase zur Wiederaufheizung der Rauchgase und zur Luftvorwärmung verwendet wird.

2. Verfahren nach Anspruch 1, dadurch gekennzeichnet, daß die Wiederaufheizung der Rauchgase bis auf eine für das katalytische DeNOx-Verfahren notwendige Temperatur erfolgt, vorzugsweise in Bereich von 130° bis 450°C, zweckmäßig 160° bis 380°C.

3. Verfahren nach Anspruch 1, dadurch gekennzeichnet, daß die Wiederaufheizung der Rauchgase in mehr als einer Stufe erfolgt, vorzugsweise in zwei oder drei Stufen.

4. Verfahren nach Anspruch 1, dadurch gekennzeichnet, daß die Luftvorwärmung in mehr als einer Stufe erfolgt, vorzugsweise in zwei oder drei Stufen.

5. Verfahren nach einem oder mehreren der vorangehenden Ansprüche 1, 3 und 4, dadurch gekennzeichnet, daß Wärme der Rauchgase zuerst bei hohem Temperaturniveau zur Luftvorwärmung in der letzten Stufe der Luftvorwärmung verwendet wird, und danach mit Wärme der Rauchgase bei niedrigerem Temperaturniveau die Wiederaufheizung der Rauchgase erfolgt.

6. Verfahren nach einem oder mehreren der vorangehenden Ansprüche 1, 3, 4 und 5, dadurch gekennzeichnet, daß zur Vorwärmung der Verbrennungsluft in der ersten Stufe der Luftvorwärmung Wärme der Rauchgase bei niedrigem Temperaturniveau verwendet wird, nachdem den Rauchgasen bereits eine Wärme bei hohem Temperaturniveau zur Luftvorwärmung und zur Wiederaufheizung der Rauchgase entzogen wurde.

7. Verfahren nach den Ansprüchen 1 und 3, dadurch gekennzeichnet, daß die Wiederaufheizung der Rauchgase bis einschließlich zur vorletzten Stufe der Wiederaufheizung der Rauchgase durch ein Absorptionssystem erfolgt.

8. Verfahren nach den Ansprüchen 1 und 3, dadurch gekennzeichnet, daß die Wiederaufheizung der Tauchgase bis einschließlich der vorletzten Stufe der Wiederaufheizung der Rauchgase durch Wärmetausch in einem Regenerationssystem zwischen den in die erste Rauchgasnachbehandlungsanlage ein- und austretenden Rauchgasen erfolgt.

9. Verfahren nach den Ansprüchen 1 und 3, dadurch gekennzeichnet, daß die Wiederaufheizung der Rauchgase bis einschließlich der vorletzten Stufe der Wiederaufheizung der Rauchgase in einem Rekuperativsystem mit Dampf erfolgt.

10. Verfahren nach den Ansprüchen 1 und 4, dadurch gekennzeichnet, daß die Luftvorwärmung bis einschließlich der vorletzten Stufe der Luftvorwärmung durch Aufnahme der in einem Absorptionssystem freiwerdenden Wärme und/oder durch Wärmetausch mit den aus der zweiten Rauchgasnachbehandlungsanlage austretenden Rauchgasen erfolgt.

11. Vorrichtung zur Durchführung des Verfahrens nach einen der vorangehenden Ansprüche 1 bis 10, dadurch gekennzeichnet, daß im Anschluß an einen Kessel (1) für die austretenden heißen Rauchgase (2) vor dem Eintritt in die erste Rauchgasnachbehandlungsanlage (6) ein erster Wärmetauscher (3) vorgesehen ist, dessen Sekundärkreislauf einerseits mit dem Primärkreislauf eines zweiten Wärmetauschers (9) verbunden ist, welcher zur Wiederaufheizung der aus der ersten Rauchgasnachbehandlungsanlage (6) austretenden Reingase (7) vorgesehen und zwischen der ersten uund der zweiten Rauchgasnachbehandlungsanlage, der DeNOx-Anlage (6, 10), angeordnet und anderseits mit dem Primärkreislauf eines dritten Wärmetauschers (15) zur Luftvorwärmung verbunden ist (Fig. 1).

12. Vorrichtung nach Anspruch 11, dadurch gekennzeichnet, daß der Sekundärkreislauf des ersten Wärmetauschers (3) mit den Primärkreisläufen der zweiten und dritten Wärmetauscher (9, 15) in Serie geschaltet ist, wobei das aus dem ersten Wärmetauscher (3) austretende Wärmeträgermedium (4) zuerst zum dritten Wärmetauscher (15) fließt (Fig. 1).

13. Vorrichtung nach Anspruch 11, dadurch gekennzeichnet, daß zwischen der ersten Rauchgasnachbehandlungsanlage (6) und dem zweiten Wärmetauscher (9) ein Wasserdampf-Absorptionssystem (8) angeordnet ist, welches die Verbrennungsluft vor dem dritten Wärmetauscher (15) vorerwärmt.

14. Vorrichtung nach Anspruch 11, dadurch gekennzeichnet, daß ein Luftvorwärmer (11) zur Zwischenerwärmung der Verbrennungsluft (12) vor dem dritten Wärmetauscher (15) angeordnet ist, welcher rauchgasseitig mit dem Ausgang der DeNOx-Anlage (10) verbunden ist und durch die aus der DeNOx-Anlage (10) austretenden Reingase beheizt wird (Fig. 1).

15. Vorrichtung zur Durchführung des Verfahrens nach einem der vorangehenden Ansprüche 1 bis 10, dadurch gekennzeichnet, daß im Anschluß an einen Kessel (1) für die austretenden heißen Rauchgase (2) vor dem Eintritt in die erste Rauchgasnachbehandlungsanlage (6) ein Regenerativsystem (17) vorgesehen ist, und daß der Ausgang der ersten Rauchgasnachbehandlungsanlage (6) über das Regenerativsystem (17) mit der DeNOx-Anlage (10) verbunden ist, an deren Ausgang ein Luftvorwärmer (11) angeschlossen ist, der durch die aus der DeNOx-Anlage (10) austretenden Reingase beheizt wird (Fig. 2).

16. Vorrichtung nach Anspruch 15, dadurch gekennzeichnet, daß zwischen der ersten Rauchgasnachbehandlungsanlage (6) und dem Regenerativsystem (17) ein Gasvorwärmer (18) angeordnet ist.

17. Vorrichtung nach Anspruch 15, dadurch gekennzeichnet, daß der Ausgang des Luftvorwärmers (11) über das Regenerativsystem (17) mit dem Kessel (1) verbunden ist (Fig. 2).

18. Vorrichtung nach den Ansprüchen 15 bis 17, dadurch gekennzeichnet, daß das Regenerativsystem (17) ein Ljungströmgasvorwärmer (17) ist.

19. Vorrichtung nach Anspruch 11, dadurch gekennzeichnet, daß zwischen dem ersten Wärmetauscher (3) und der ersten Rauchgasnachbehandlungsanlage (6) ein vierter Wärmetauscher (19) angeordnet ist, dessen Sekundärkreislauf mit dem Primärkreislauf eines fünften Wärmetauschers (20) zur Luftvorwärmung verbunden ist, und daß ein Luftvorwärmer (11) zur Zwischenerwärmung der Verbrennungsluft zwischen dem dritten Wärmetauscher (15) und dem fünften Wärmetauscher (20) angeordnet ist, welcher mit dem Ausang einer DeNOx-Anlage (10) verbunden ist und durch die aus der DeNOx-Anlage (10) austretenden Reingase beheizt wird (Fig. 3).

20. Vorrichtung zur Durchführung des Verfahrens nach den Ansprüchen 1 bis 9, dadurch gekennzeichnet, daß im Anschluß an einen Kessel (1) für die austretenden heißen Rauchgase vor dem Eintritt in die erste Rauchgasnachbehandlungsanlage (6) zumindest ein Wärmetauschersystem (23 bis 26; 27) für die Luftvorwärmung und zumindest ein Wärmetauschersystem (3', 4, 9, 16) für die Rauchgaswiederaufheizung vorgesehen ist, und daß der Ausgang der ersten Rauchgasnachbehandlungsanlage (6) mit der DeNOx-Anlage (10) verbunden ist, an deren Ausgang ein Luftvorwärmer (11) angeschlossen ist, der durch die aus der DeNOx-Anlage (10) austretenden Reingase beheizt wird (Fig. 4 und 5).

21. Vorrichtung nach den Ansprüchen 11, 15, 19, 20, dadurch gekennzeichnet, daß die erste Rauchgasnachbehandlungsanlage (6) eine Rauchgasentschwefelungsanlage ist.

22. Vorrichtung nach den Ansprüchen 11, 14, 15, 19, 20, dadurch gekennzeichnet, daß die DeNOx-Anlage (10) mit dem Luftvorwärmer (11) zu einer kompakten Einheit zusammengefaßt ist.

23. Vorrichtung nach den Ansprüchen 11, 19, 20, dadurch gekennzeichnet, daß die DeNOx-Anlage (10) mit dem zweiten Wärmetauscher (9) zu einer kompakten Einheit zusammengefaßt ist.

24. Vorrichtung nach den Ansprüchen 11, 14, 19, 20, dadurch gekennzeichnet, daß in Reihenfolge der zweite Wärmetauscher (9) mit der DeNOx-Anlage (10) und dem Luftvorwärmer (11) in Serie liegend zu einer kompakten Einheit zusammengefaßt sind.

25. Vorrichtung nach den Ansprüchen 22 und 24, dadurch gekennzeichhet, daß die Wärmetauschflächen des Wärmetauschers (9) und/oder des Luftvorwärmers (11) als Katalysatoroberflächen ausgebildet sind.


**Claims**

1. A process of thermally treating flue gases which come from a boiler system and are conducted through two series-connected flue gas aftertreating plants, wherein the second flue gas aftertreating plant is an NOx-removing plant and is operated at a higher flue gas temperature than the first flue gas aftertreating plant, and of thermally treating combustion air to te supplied to the boiler system, characterized in that heat of the flue gases is used to reheat the flue gases and to preheat air.

2. A process according to claim 1, characterized in that the flue gases are reheated to a temperature which is required for the catalytic NOx-removing process and preferably lies in the range from 130 to 450°C, suitably from 160 to 380°C.

3. A process according to claim 1, characterized in that the flue gases are reheated in more than one stage and preferably in two or three stages.

4. A process according to claim 1, characterized in that the air is preheated in more than one stage and preferably in two or three stages.

5. A process according to any of the preceding claims 1, 3 and 4, characterized in that the heat of the flue gases is first used at a high temperature for preheating air in the last air-preheating stage and the flue gases are subsequently reheated with flue gas heat at a lower temperature.

6. A process according to any of the preceding claims 1, 3, 4 and 5, characterized in that heat of the flue gases at a lower temperature is used to preheat the combustion air in the first air-preheating stage after heat at a high temperature has been extracted from the flue gases and used to preheat air and to reheat the flue gases.

7. A process according to claims 1 and 3, characterized in that an absorption system is used to reheat the flue gases up to and inclusive of the last but one flue gas reheating stage.

8. A process according to claims 1 and 3, characterized im that the flue gases are reheated up to and inclusive of the last but one flue gas reheating stage by a heat exchange which is effected in a regenerative system between the flue gases which enter and leave the first flue gas aftertreating plant.

9. A process according to claims 1 and 3, characterized in that steam is used in a recuperative system to reheat the flue gases up to and inclusive of the last but one flue gas reheating stage.

10. A process according to claims 1 and 4, characterized in that the air is preheated up to and inclusive of the last but one air-preheating stage by an absorption of the heat which is liberated in an absorption system and/or by a heat exchange with the flue gases leaving the second flue gas aftertreating plant.

11. Apparatus for carrying out the process according to any of the preceding claims 1 to 10, characterized in that the flow path between a boiler (1) for discharging hot flue gases (2) and the inlet of the first flue gas aftertreating plant (6) includes a first heat exchanger (3) having a secondary circuit which is connected to the primary circuit of a second heat exchanger (9), which is connected between the first flue gas aftertreating plant (6) and the second flue gas aftertreating plant (10), which consists of an NOx-removing plant, said second heat exchanger serves to reheat the pure gases (7) leaving the first flue gas aftertreating plant (6), and the secondary circuit of the first heat exchanger (3) is also connected to the primary circuit of an air-reheating third heat exchanger (15) (Figure 1).

12. Apparatus according to claim 11, characterized in that the secondary circuit of the first heat exchanger (3) is connected in series with the primary circuits of the second and third heat exchangers (9, 15), and the heat transfer fluid (4) leaving the first heat exchanger (3) first flows to the third heat exchanger (15) (Figure 1).

13. Apparatus according to claim 11, characterized in that a water vapour absorbing system (8) for preheating the combustion air before the third heat exchanger (15) is connected between the first flue gas aftertreating plant (6) and the second heat exchanger (9).

14. Apparatus according to claim 11, characterized in that an air preheater (11) for reheating the combustion air (12) precedes the third heat exchanger (15), which has a flue gas flow path that is connected to the outlet of the NOx-removing plant (10) and the third heat exchanger is heated by the pure gases leaving the NOx-removing plant (10) (Figure 1).

15. Apparatus for carrying out the process according to any of the preceding claims 1 to 10, characterized in that the flow path between a boiler (1) for discharging hot flue gases (2) and the inlet of the first flue gas aftertreating plant (6) comprises a regenerative system (17), by which the cutlet of the first flue gas aftertreating plant (6) is connected to the NOx-removing plant (10), the outlet of which is connected to an air preheater (11), which is heated by the flue gases leaving the NOx-removing plant (10) (Figure 2).

16. Apparatus according to claim 15, characterized in that a gas preheater (18) is connected between the first flue gas aftertreating plant (6) and the regenerative system (17).

17. Apparatus according to claim 15, characterized in that the outlet of the air preheater (11) is connected to the boiler (1) by the regenerative system (17) (Figure 2).

18. Apparatus according to claims 15 to 17, characterized in that the regenerative system (17) is a Ljungström gas preheater (17).

19. Apparatus according to claim 11, characterized in that a fourth heat exchanger (19) is connected between the first heat exchanger (3) and the first flue gas aftertreating plant (6) and has a secondary circuit that is connected to the primary circuit of an air-preheating fifth heat exchanger (20), an air preheater (11) for reheating the combustion air is connected between the third heat exchanger (15) and the fifth heat exchanger (20) and the latter is connected to the outlet of an NOx-removing plant (10) and is heated by the pure gases leaving the NOx-removing plant (10) (Figure 3).

20. Apparatus for carrying out the process according to claims 1 to 9, characterized in that the flow path connected between a boiler (1) for discharging hot flue gases and the inlet of the first flue gas aftertreating plant (6) includes at least one air-preheating heat exchanger system (23 to 26; 27) and at least one flue gas reheating heat exctanger system (3', 4, 9, 16) and the outlet of the first flue gas reheating plant (6) is connected to the NOx-removing plant (10), the outlet of which is connected to an air-preheater (11), which is heated by the pure gases leaving the NOx-removing plant (10) (Figures 4 and 5).

21. Apparatus according to claims 11, 15, 19, 20, characterized in that the first flue gas aftertreating plant (6) is a flue gas desulfurizing plant.

22. Apparatus according to claims 11, 14, 15, 19, 20, characterized in that the NOx-removing plant (10) and the air preheater (11) are combined in a compact unit.

23. Apparatus according to claims 11, 19, 20, characterized in that the NOx-removing plant (10) and the second heat exchanger (9) are combined in a compact unit.

24. Apparatus according to claims 11, 14, 19, 20, characterized in that the second heat exchanger (9), the NOx-removing plant (10) and the air preheater (11) are connected in series in that order and are combined in a compact unit.

25. Apparatus according to claims 22 and 24, characterized in that the heat exchange surfaces of the heat exchanger (9) and/or the air preheater (11) constitute catalyst surfaces.

**Revendications**

1. Procédé de traitement thermique des fumées d'une chaudière, réalisé par deux installations de traitement des fumées montées en série, la température des fumées dans la deuxième installation de traitement qui est une installation DeNOx, est supérieure à celle régnant dans la première installation, ainsi que de traitement thermique de l'air de combustion envoyé vers la chaudière, caractérisé en ce que la chaleur des fumées est utilisée pour élever à nouveau la température des fumées et pour réchauffer l'air.

2. Procédé selon la revendication 1, caractérisé en ce que l'élévation de la température des fumées s'effectue jusqu'à une température nécessaire au procédé catalytique DeNOx, de préférence dans une gamme comprise entre 130° et 450° C, avantageusement entre 160° et 380° C.

3. Procédé selon la revendication 1, caractérisé en ce que le réchauffage des fumées s'effectue en plusieurs étapes, de préférence en deux ou trois étapes.

4. Procédé selon la revendication 1, caractérisé en ce que le réchauffage de l'air s'effectue en plus d'une étape, de préférence en deux ou trois étapes.

5. Procédé selon une ou plusieurs des revendications 1, 3 et 4, caractérisé en ce que la chaleur des fumées est utilisée tout d'abord à une température élevée pour réchauffer l'air au cours de la dernière étape du réchauffement de l'air, et en ce qu'ensuite le réchauffement des fumées s'effectue avec la chaleur des fumées, à une température plus basse.

6. Procédé selon une ou plusieurs des revendications 1, 3, 4 et 5, caractérisé en ce que l'on utilise la chaleur des fumées à un niveau de température bas pour réchauffer l'air de combustion au cours de la première étape du réchauffement de l'air, après que l'on a déjà prélevé des fumées une chaleur à un niveau de température élevé pour réchauffer l'air et élever la température des fumées.

7. Procédé selon les revendications 1 et 3, caractérisé en ce que le réchauffement des fumées jusqu'à l'avant-dernière étape comprise du réchauffement des fumées s'effectue au moyen d'un système à absorption.

8. Procédé selon les revendications 1 et 3, caractérisé en ce que le réchauffement des fumées jusqu'à l'avant-dernière étape comprise du réchauffement des fumées s'effectue par échange de chaleur dans un système à régénération entre les fumées entrant et s'échappant de la première installation de traitement des fumées.

9. Procédé selon les revendications 1 et 3, caractérisé en ce que le réchauffement des fumées jusqu'à l'avant-dernière étape comprise du réchauffement des fumées s'effectue dans un système de récupération avec vapeur.

10. Procédé selon les revendications 1 et 4, caractérisé en ce que le réchauffement de l'air jusqu'à l'avant-dernière étape comprise du réchauffement de l'air s'effectue par absorbtion de la chaleur libérée dans un système à absorption et/ou par échange de chaleur avec les fumées s'échappant de la deuxième installation de traitement des fumées.

11. Dispositif de mise en oeuvre du procédé selon une des revendications 1 à 10, caractérisé en ce qu'il est prévu un premier échangeur de chaleur (3) à la suite d'une chaudière (1) pour les fumées (2) chaudes évacuées, avant l'entrée dans la première installation de traitement des fumées (6), le circuit secondaire de l'échangeur de chaleur (3) étant relié d'une part au circuit primaire d'un deuxième échangeur de chaleur (9) qui est prévu pour réchauffer les gaz épurés (7) s'échappant de la première installation de traitement des fumées (6) et disposé entre la première (6) et la deuxième installation de traitement des fumées (10) qui est une installation DeNOx, et étant relié d'autre part au circuit primaire d'un troisième échangeur de chaleur (15) pour le réchauffement de l'air (figure 1).

12. Dispositif selon la revendication 11, caractérisé en ce que le circuit secondaire du premier échangeur de chaleur (3) est monté en série avec les circuits primaires des deuxième et troisième échangeurs de chaleur (9, 15), le fluide caloporteur (4) sortant du premier échangeur de chaleur (3) s'écoulant tout d'abord vers le troisième échangeur de chaleur (15) (figure 1).

13. Dispositif selon la revendication 11, caractérisé en ce qu'un système à absorption à vapeur d'eau (8) est disposé entre la première installation de traitement des fumées (6) et le deuxième échangeur de chaleur (9), qui réchauffe l'air de combustion avant le troisième échangeur de chaleur (15).

14. Dispositif selon la revendication 11, caractérisé en ce qu'un réchauffeur d'air (11) destiné au réchauffement intermédiaire de l'air de combustion (12) est disposé avant le troisième échangeur de chaleur (15) qui est relié côté fumées à la sortie de l'installation DeNOx (10) et est chauffé par les gaz épurés s'échappant de l'installation DeNOx (10) (figure 1).

15. Dispositif de mise en oeuvre du procédé selon l'une des revendications 1 à 10, caractérisé en ce qu'il est prévu un système de régénération (17) à la suite d'une chaudière (1) pour les fumées (2) chaudes s'échappant avant l'entrée dans la première installation de traitement des fumées (6), et en ce que la sortie de la première installation de traitement des fumées (6) est reliée par le système de régénération (17) à l'installation DeNOx (10), à la sortie de laquelle un réchauffeur d'air (11) est raccordé qui chauffe les gaz épurés s'échappant de l'installation DeNOx (10) (figure 2).

16. Dispositif selon la revendication 15, caractérisé en ce qu'un réchauffeur de gaz (18) est disposé entre la première installation de traitement des fumées (6) et le système de régénération (17).

17. Dispositif selon la revendication 15, caractérisé en ce que la sortie du réchauffeur d'air (11) est reliée à la chaudière (1) par le système de régénération (17) (figure 2).

18. Dispositif selon les revendications 15 à 17, caractérisé en ce que le système de régénération (17) est un réchauffeur de gaz Ljungström (17).

19. Dispositif selon la revendication 11, caractérisé en ce qu'un quatrième échangeur de chaleur (19) est disposé entre le premier échangeur de chaleur (3) et la première installation de traitement des fumées (6), dont le circuit secondaire est relié au circuit primaire d'un cinquième échangeur de chaleur (20) pour le réchauffement de l'air, et en ce qu'un réchauffeur d'air 11 destiné au réchauffement intermédiaire de l'air de combustion est disposé entre le troisième échangeur de chaleur (15) et le cinquième échangeur de chaleur (20), qui est relié à la sortie d'une installation DeNOx (10) et est chauffé par les gaz épurés s'échappant de l'installation DeNOx (10) (figure 3).

20. Dispositif de mise en oeuvre du procédé selon les revendications 1 à 9, caractérisé en ce qu'il est prévu à la suite d'une chaudière (1) pour les fumées chaudes évacuées, avant l'entrée dans la première installation de traitement des fumées, au moins un système d'échangeurs de chaleur (23 à 26; 27) pour le réchauffement de l'air et au moins un système d'échangeurs de chaleur (3', 4, 9, 16) pour le réchauffement des fumées, et en ce que la sortie de la première installation de traitement des fumées (6) est reliée à l'installation DeNOx (10) à la sortie de laquelle est raccordé un réchauffeur d'air (11) qui est chauffé par les gaz épurés sortant de l'installation DeNOx (10) (figures 4 et 5).

21. Dispositif selon les revendications 11, 15, 19, 20, caractérisé en ce que la première installation de traitement des fumées (6) est une installation de désulfuration des fumées.

22. Dispositif selon les revendications 11, 14, 15, 19, 20, caractérisé en ce que l'installation DeNOx (10) est regroupée avec le réchauffeur d'air (11) pour former une unité compacte.

23. Dispositif selon les revendications 11, 19, 20, caractérisé en ce que l'installation DeNOx (10) est regroupée avec le deuxième échangeur de chaleur (9) pour former une unité compacte.

24. Dispositif selon les revendications 11, 14, 19, 20, caractérisé en ce que le deuxième échangeur de chaleur (9) est regroupé en série et dans l'ordre avec l'installation DeNOx (10) et le réchauffeur d'air (11) pour former une unité compacte.

25. Dispositif selon les revendications 22 et 24, caractérisé en ce que les surfaces d'échange de chaleur de l'échangeur de chaleur (9) et/ou du réchauffeur d'air (11) sont des surfaces de catalyseur.

**Revendications**

1. Verfahren zur thermiechen Behandlung von Rauchgasen aus einem Kesselsystem, die durch zwei in Serie geschaltete Rauchgaenachbehandlungsanlagen geführt werden, wobei die Rauchgastemperatur in der zweiten Rauchgasnachbehandlungsanlage, die eine DeNox-Anlage ist, höher als jene in der ersten ist und zur thermischen Behandlung von der dem Keeselsystem zugeführten Verbrennungeluft, dadurch gekennzeichnet, daß Wärne der Rauchgase zur Wiederaufheizung der Rauchgase und zur Luftvorwärmung verwendet wird.

2. Verfahren nach Anepruch 1, dadurch gekennzeichnet, daß die Wiederaufheizung der Rauchgase bis auf eine für das, katalytische DeNOx-Verfahren notwendige Temperatur erfolgt, vorzugsweise in Bereich von 130° bis 450° C, zweckmäßig 160° bis 380° C.

3. Verfahren nach Anspruch 1, dadurch gekennzeichnet, daß die Wiederaufheizung der Rauchgase in mehr als einer Stufe erfolgt, vorzugsweise in zwei oder drei Stufen.

4. Verfahren nach Anspruch 1, dadurch gekennzeichnet, daß die Luftvorwärmung in mehr als einer Stufe erfolgt, vorzugsweise in zwei oder drei Stufen.

5. Verfahren nach einem oder mehreren der vorangehenden Aneprüche 1, 3 und 4, dadurch gekennzeichnet, daß Wärme der Rauchgase zuerst bei hohem Temperaturniveau zur Luftvorwärmung in der letzten Stufe der Luftvorwärmung verwendet wird, und danach mit Wärme der Rauchgase bei niedrigerem Temperaturniveau die Wiederaufheizung der Rauchgase erfolgt.

6. Verfahren nach einem oder mehreren der vorangehenden Ansprüche 1, 3, 4 und 5, dadurch gekennzeichnet, daß zur Vorwärmung der Verbrennungsluft in der ersten Stufe der Luftvorwärmung Wärme der Rauchgase bei niedrigem Temperaturniveau verwendet wird, nachdem den Rauchgasen bereits eine Wärme bei hohem Temperaturniveau zur Luftvorwärmung und zur Wiederaufheizung der Rauchgase entzogen wurde.

7. Verfahren nach den Ansprüchen 1 und 3, dadurch gekennzeichnet, daß die Wiederaufheizung der Rauchgase bis einschließlich zur vorletzten Stufe der Wiederaufheizung der Rauchgase durch ein Absorptionssystem erfolgt.

8. Verfahren nach den Ansprüchen 1 und 3, dadurch gekennzeichnet, daß die Wiederaufheizung der Tauchgase bis einschließlich der vorletzten Stufe der Wiederaufheizung der Rauchgase durch Wärmetausch in einem Regenerationssystem zwischen den in die erste Rauchgasnachbehandlungsanlage ein- und austretenden Rauchgasen erfolgt.

9. Verfahren nach den Ansprüchen 1 und 3, dadurch gekennzeichnet, daß die Wiederaufheizung der Rauchgase bis einschließlich der vorletzten Stufe der Wiederaufheizung der Rauchgase in einem Rekuperativsystem mit Dampf erfolgt.

10. Verfahren nach den Ansprüchen 1 und 4, dadurch gekennzeichnet, daß die Luftvorwärmung bis einschließlioh der vorletzten Stufe der Luftvorwärmung durch Aufnahme der in einem Absorptionssystem freiwerdenden Wärme und/oder durch Wärmetausch mit den aus der zweiten Rauchgasnachbehandlungsanlage austretenden Raudhgasen erfolgt.

11. Vorrichtung zur Durchführung des Verfahrens nach einen der vorangehenden Ansprüche 1 bis 10, dadurch gekennzeichnet, daß im Anschluß an einen Kessel (1) für die austretenden heißen Rauchgase (2) vor dem Eintritt in die erste Rauchgasnachbehandlungsanlage (6) ein erster Wärmetauscher (3) vorgesehen ist, dessen Sekundärkreislauf einerseits mit dem Primärkreislauf eines zweiten Wärmetauschers (9) verbunden ist, welcher zur Wiederaufheizung der aus der ersten Rauchgasnachbehandlungsanlage (6) austretenden Reingase (7) vorgesehen und zwischen der ersten und der zweiten Rauchgasnachbehandlungsanlage, der DeNOx-Anlage (6, 10), angeordnet und anderseits mit dem Primärkreislauf eines dritten Wärmetauschers (15) zur Luftvorwärmung verbunden ist (Fig. 1).

12. Vorrichtung nach Anspruch 11, dadurch gekennzeichnet, daß der Sekundärkreislauf des ersten Wärmetauschers (3) mit den Primärkreisläufen der zweiten und dritten Wärnetauscher (9, 15) in Serie geschaltet ist, wobei das aus dem ersten Wärmetauscher (3) austretende Wärmeträgermedium (4) zuerst zum dritten Wärmetauscher (15) fließt (Fig. 1).

13. Vorrichtung nach Anspruch 11, dadurch gekennzeichnet, daß zwischen der ersten Rauchgasnachbehandlungsanlage (6) und dem zweiten Wärmetauscher (9) ein Wasserdampf-Absorptionssystem (8) angeordnet ist, welches die Verbrennungsluft vor dem dritten Wärmetauscher (15) vorerwärmt.

14. Vorrichtung nach Anspruch 11, dadurch gekennzeichnet, daß ein Luftvorwärmer (11) zur Zwischenerwärmung der Verbrennungsluft (12) vor dem dritten Wärmetauscher (15) angeordnet ist, weloher rauchgasseitig mit dem Ausgang der DeNOx-Anlage (10) verbunden ist und durch die aus der DeNOx-Anlage (10) austretenden Reingase beheizt wird (Fig. 1).

15. Vorrichtung zur Durchführung des Verfahrens nach einem der vorangehenden Ansprüche 1 bis 10, dadurch gekennzeichnet, daß im Anschluß an einen Kessel (1) für die austretenden heißen Rauchgase (2) vor dex Eintritt in die erste Rauchgasnachbehandlungsanlage (6) ein Regenerativsystem (17) vorgesehen ist, und daß der Ausgang der eraten Rauchgasnachbehandlungsanlage (6) über das Regenerativsystem (17) mit der DeNOx-Anlage (10) verbunden ist, an deren Auegang ein Luftvorwärner (11) angeschlossen ist, der durch die aus der DeNOx-Anlage (10) austretenden Reingase beheizt wird (Fig. 2).

16. Vorrichtung nach Anspruch 15, dadurch gekennzeichnet, daß zwischen der ersten Rauchgasnachbehandlungsanlage (6) und dem Regenerativsystem (17) ein Gasvorwärmer (18) angeordnet ist.

17. Vorrichtung nach Anspruch 15, dadurch gekennzeichnet, daß der Ausgang des Luftvorwärmers (11) über das Regenerativsystem (17) mit dem Kessel (1) verbunden ist (Fig. 2).

18. Vorrichtung nach den Ansprüchen 15 bis 17, dadurch gekennzeichnet, daß das Regenerativsystem (17) ein Ljungströmgasvorwärmer (17) ist.

19. Vorrichtung nach Anspruch 11, dadurch gekennzeichnet, daß zwischen dem ersten Wärmetauscher (3) und der ersten Rauchgasnachbehandlungsanlage (6) ein vierter Wärmetauscher (19) angeordnet ist, dessen Sekundärkreislauf mit dem Primärkreislauf eines fünften Wärmetauschers (20) zur Luftvorwärnung verbunden ist, und daß ein Luftvorwärmer (11) zur Zwischenerwärmung der Verbrennungsluft zwischen dem dritten Wärmetauscher (15) und dem fünften Wärmetauscher (20) angeordnet ist, welcher mit dem Ausang einer DeNOx-Anlage (10) verbunden ist und durch die aus der DeNOx-Anlage (10) austretenden Reingase beheizt wird (Fig. 3).

20. Vorrichtung zur Durchführung des Verfahrens nach den Ansprüchen 1 bis 9, dadurch gekennzeichnet, daß im Anschluß an einen Kessel (1) für die austretenden heißen Rauchgase vor dem Eintritt in die erste Rauchgasnachbehandlungsanlage (6) zumindest ein Wärmetauschersystem (23 bis 26; 27) für die Luftvorwärmung und zumindest ein Wärmetauschersystem (3', 4, 9, 16) für die Rauchgaswiederaufheizung vorgesehen ist, und daß der Ausgang der ersten Rauchgasnachbehandlungsanlage (6) mit der DeNOx-Anlage (10) verbunden ist, an deren Ausgang ein Luftvorwärmer (11) angeschlossen ist, der durch die aus der DeNOx-Anlage (10) austretenden Reingase beheizt wird (Fig. 4 und 5).

21. Vorrichtung nach den Ansprüchen 11, 15, 19, 20, dadurch gekennzeichnet, daß die erste Rauchgasnachbehandlungsanlage (6) eine Rauchgasentschwefelungsanlage ist.

22. Vorrichtung nach den Ansprüchen 11, 14, 15, 19, 20, dadurch gekennzeichnet, daß die DeNOx-Anlage (10) mit dem Luftvorwärmer (11) zu einer kompakten Einheit zusammengefaßt ist.

23. Vorrichtung nach den Ansprüchen 11, 19, 20, dadurch gekennzeichnet, daß die DeNOx-Anlage (10) mit dem zweiten Wärmetauscher (9) zu einer kompakten Einheit zusammengefaßt ist.

24. Vorrichtung nach den Ansprüchen 11, 14, 19, 20, dadurch gekennzeichnet, daß in Reihenfolge der zweite Wärmetauscher (9) mit der DeNOx-Anlage (10) und dem Luftvorwärmer (11) in Serie liegend zu einer kompakten Einheit zusammengefaßt sind.

25. Vorrichtung nach den Ansprüchen 22 und 24, dadurch gekennzeichnet, daß die Wärmetauschflächen des Wärmetauschers (9) und/oder des Luftvorwärmers (11) als Katalysatoroberflächen ausgebildet sind.

## Claims

1. A process of thermally treating flue gases which come from a boiler system and are conducted through two series-connected flue gas aftertreating plants, wherein the second flue gas aftertreating plant is an NOx -removing plant and is operated at a higher flue gas temperature than the first flue gas aftertreating plant, and of thermally treating combustion air to te supplied to the boiler system, characterized in that heat of the flue gases is used to reheat the flue gases and to preheat air.

2. A process according to claim 1, characterized in that the flue gases are reheated to a temperature which is required for the catalytic NOx -removing process and preferahly lies in the range from 130 to 450° C, suitably from 160 to 380° C.

3. A process according to claim 1, characterized in that the flue gases are reheated in more than one stage and preferably in two or three stages.

4. A process according to claim 1, characterized in that the air is preheated in more than one stage and preferably in two or three stages.

5. A process according to any of the preceding claims 1,3 and 4, characterized in that the heat of the flue gases is first used at a high temperature for preheating air in the last air-preheating stage and the flue gases are subsequently reheated with flue gas heat at a lower temperature.

6. A process according to any of the preceding claims 1,3,4 and 5, characterized in that heat of the flue gases at a lower temperature is used to preheat the combustion air in the first air-preheating stage after heat at a high temperature has been extracted from the flue gases and used to preheat air and to reheat the flue gases.

7. A process according to claims 1 and 3, characterized im that an absorption system is used to reheat the flue gases up to and inclusive of the last but one flue gas reheating stage.

8. A process according to claims 1 and 3, characterized im that the flue gases are reheated up to and inclusive of the last but one flue gas reheating stage by a heat exchange which is effected in a regenerative system between the flue gases which enter and leave the first flue gas aftertreating plant.

9. A process according to claims 1 and 3, characterized in that steam is used in a recuperative system to reheat the flue gases up to and inclusive of the last but one flue gas reheating stage.

10. A process according to claims 1 and 4, characterized in that the air is preheated up to and inclusive of the last but one airpreheating stage hy an absorption of the heat which is liberated in an absorption system and/or by a heat exchange with the flue gases leaving the second flue gas aftertreating plant.

11. Apparatus for carrying out the process according to any of the preceding claims 1 to 10, characterized in that the flow path between a boiler (1) for discharging hot flue gases (2) and the inlet of the first flue gas aftertreating plant (6) includes a first heat exchanger (3) having a secondary circuit which is connected to the primary circuit of a second heat exchanger (9), which is connected between the first flue gas aftertreating plant (6) and the second flue gas aftertreating plant (10), which consists of an NO-removing plant, said second heat exchanger serves to reheat the pure gases (7) leaving the first flue gas aftertreating plant (6), and the secondary circuit of the first heat exchanger (3) is also connected to the primary circuit of an air-reheating third heat exchanger (15) (Figure 1).

12. Apparatus according to claim 11, characterized in that the secondary circuit of the first heat exchanger (3) is connected in series with the primary circuits of the second and third heat exchangers (9, 15), and the heat transfer fluid (4) leaving the first heat exchanger (3) first flows to the third heat exchanger (15) (Figure 1).

13. Apparatus according to claim 11, characterized in that a water vapour absorbing system (8) for preheating the combustion air before the third heat exchanger (15) is connected between the first flue gas aftertreating plant (6) and the second heat exchanger (9).

14. Apparatus according to claim 11, characterized in that an air preheater (11) for reheating the combustion air (12) precedes the third heat exchanger (15), which has a flue gas flow path that is connected to the outlet of the NOx -removing plant (10) and the third heat exchanger is heated by the pure gases leaving the NOx -removing plant (10) (Figure 1).

15. Apparatus for carrying out the process according to any of the preceding claims 1 to 10, characterized in that the flow path between a toiler (1) for discharging hot flue gases (2) and the inlet of the first flue gas aftertreating plant (6) comprises a regenerative system (17), by which the cutlet of the first flue gas aftertreating plant (6) is connected to the NOx -removing plant (10), the outlet of which is connected to an air preheater (11), which is heated by the flue gases leaving the NOx -removing plant (10) (Figure 2).

16. Apparatus according to claim 15, characterized in that a gas preheater (18) is connected between the first flue gas aftertreating plant (6) and the regenerative system (17).

17. Apparatus according to claim 15, characterized in that the outlet of the air preheater (11) is connected to the boiler (1) by the regenerative system (17) (Figure 2).

18. Apparatus according to claims 15 to 17, characterized in that the regenerative system (17) is a Sjungström gas preheater (17).

19. Apparatus according to claim 11, characterized in that a fourth heat exchanger (19) is connected tetween the first heat exchanger (3) and the first flue gas aftertreating plant (6) and has a secondary circuit that is connected to the primary circuit of an air-preheating fifth heat exchanger (20), an air preheater (11) for reheating the combustion air is connected between the third heat exchanger (15) and the fifth heat exchanger (20) and the latter is connected to the outlet of an NOx -removing plant (10) and is heated by the pure gases leaving the NOx -removing plant (10) (Figure 3).

20. Apparatus for carrying out the process according to claims 1 to 9, characterized in that the flow path connected between a boiler (1) for discharging hot flue gases and the inlet of the first flue gas aftertreating plant (6) includes at least one airpreheating heat exchanger system (23 to 26; 27) and at least one flue gas reheating heat exctanger system (3′, 4, 9, 16) and the outlet of the first flue gas reheating plant (6) is connected to the NOx -removing plant (10), the outlet of which is connected to an air-preheater (11), which is heated by the pure gases leaving the NOx -removing plant (10) (Figures 4 and 5).

21. Apparatus according to claims 11, 15, 19, 20, characterized in that the first flue gas aftertreating plant (6) is a flue gas desulfurizing plant.

22. Apparatus according to claims 11, 14, 15, 19, 20, characterized in that the NOx -removing plant (10) and the air preheater (11) are combined in a compact unit.

23. Apparatus according to claims 11, 19, 20, characterized in that the NOx -removing plant (10) and the second heat exchanger (9) are combined in a compact unit.

24. Apparatus according to claims 11, 14, 19, 20, characterized in that the second heat exchanger (9), the NOx -removing plant (10) and the air preheater (11) are connected in series in that order and are combined in a compact unit.

25. Apparatus according to claims 22 and 24, characterized in that the heat exchange surfaces of the heat exchanger (9) and/or the air preheater (11) constitute catalyst surfaces.

**Revendications**

1. Procédé de traitement thermique des fumées d'une chaudière, réalisé par deux installations de traitement des fumées montées en série, la température des fumées dans la deuxième installation de traitement qui est une installation DeNOx, est supérieure à celle régnant dans la première installation, ainsi que de traitement thermique de l'air de combustion envoyé vers la chaudière, caractérisé en ce que la chaleur des fumées est utilisée pour élever à nouveau la température des fumées et pour réchauffer l'air.

2. Procédé selon la revendication 1, caractérisé en ce que l'élévation de la température des fumées s'effectue jusqu'à une température nécessaire au procédé catalytique DeNOx, de préférence dans une gamme comprise entre 130° et 450°C, avantageusement entre 160° et 380°C.

3. Procédé selon la revendication 1, caractérisé en ce que le réchauffage des fumées s'effectue en plusieurs étapes, de préférence en deux ou trois étapes.

4. Procédé selon la revendication 1, caractérisé en ce que le réchauffage de l'air s'effectue en plus d'une étape, de préférence en deux ou trois étapes.

5. Procédé selon une ou plusieurs des revendications 1, 3 et 4, caractérisé en ce que la chaleur des fumées est utilisée tout d'abord à une température élevée pour réchauffer l'air au cours de la dernière étape du réchauffement de l'air, et en ce qu'ensuite le réchauffement des fumées s'effectue avec la chaleur des fumées, à une température plus basse.

6. Procédé selon une ou plusieurs des revendications 1, 3, 4 et 5, caractérisé en ce que l'on utilise la chaleur des fumées à un niveau de température bas pour réchauffer l'air de combustion au cours de la première étape du réchauffement de l'air, après que l'on a déjà prélevé des fumées une chaleur à un niveau de température élevé pour réchauffer l'air et élever la température des fumées.

7. Procédé selon les revendications 1 et 3, caractérisé en ce que le réchauffement des fumées jusqu'à l'avant-dernière étape comprise du réchauffement des fumées s'effectue au moyen d'un système à absorption.

8. Procédé selon les revendications 1 et 3, caractérisé en ce que le réchauffement des fumées jusqu'à l'avant-dernière étape comprise du réchauffement des fumées s'effectue par échange de chaleur dans un système à régénération entre les fumées entrant et s'échappant de la première installation de traitement des fumées.

9. Procédé selon les revendications 1 et 3, caractérisé en ce que le réchauffement des fumées jusqu'à l'avant-dernière étape comprise du réchauffement des fumées s'effectue dans un système de récupération avec vapeur.

10. Procédé selon les revendications 1 et 4, caractérisé en ce que le réchauffement de l'air jusqu'à l'avant-dernière étape comprise du réchauffement de l'air s'effectue par absorbtion de la chaleur libérée dans un système à absorption et/ou par échange de chaleur avec les fumées s'échappant de la deuxième installation de traitement des fumées.

11. Dispositif de mise en oeuvre du procédé selon une des revendications 1 à 10, caractérisé en ce qu'il est prévu un premier échangeur de chaleur (3) à la suite d'une chaudière (1) pour les fumées (2) chaudes évacuées, avant l'entrée dans la première installation de traitement des fumées (6), le circuit secondaire de l'échangeur de chaleur (3) étant relié d'une part au circuit primaire d'un deuxième échangeur de chaleur (9) qui est prévu pour réchauffer les gaz épurés (7) s'échappant de la première installation de traitement des fumées (6) et disposé entre la première (6) et la deuxième installation de traitement des fumées (10) qui est une installation DeNOx, et étant relié d'autre part au circuit primaire d'un troisième échangeur de chaleur (15) pour le réchauffement de l'air (figure 1).

12. Dispositif selon la revendication 11, caractérisé en ce que le circuit secondaire du premier échangeur de chaleur (3) est monté en série avec les circuits primaires des deuxième et troisième échangeurs de chaleur (9, 15), le fluide caloporteur (4) sortant du premier échangeur de chaleur (3) s''écoulant tout d'abord vers le troisième échangeur de chaleur (15) (figure 1).

13. Dispositif selon la revendication 11, caractérisé en ce qu'un système à absorption à vapeur d'eau (8) est disposé entre la première installation de traitement des fumées (6) et le deuxième échangeur de chaleur (9), qui réchauffe l'air de combustion avant le troisième échangeur de chaleur (15).

14. Dispositif selon la revendication 11, caractérisé en ce qu'un réchauffeur d'air (11) destiné au réchauffement intermédiaire de l'air de combustion (12) est disposé avant le troisième échangeur de chaleur (15) qui est relié côté fumées à la sortie de l'installation DeNOx (10) et est chauffé par les gaz épurés s'échappant de l'installation DeNOx (10 (figure 1).

15. Dispositif de mise en oeuvre du procédé selon l'une des revendications 1 à 10, caractérisé en ce qu'il est prévu un système de régénération (17) à la suite d'une chaudière (1) pour les fumées (2) chaudes s'échappant avant l'entrée dans la première installation de traitement des fumées (6), et en ce que la sortie de la première installation de traitement des fumées (6) est reliée par le système de régénération (17) à l'installation DeNOx (10), à la sortie de laquelle un réchauffeur d'air (11) est raccordé qui chauffe les gaz épurés s'échappant de l'installation DeNOx (10) (figure 2).

16. Dispositif selon la revendication 15, caractérisé en ce qu'un réchauffeur de gaz (18) est disposé entre la première installation de traitement des fumées (6) et le système de régénération (17).

17. Dispositif selon la revendication 15, caractérisé en ce que la sortie du réchauffeur d'air (11) est reliée à la chaudière (1) par le système de régénération (17) (figure 2).

18. Dispositif selon les revendications 15 à 17, caractérisé en ce que le système de régénération (17) est un réchauffeur de gaz Ljungström (17).

19. Dispositif selon la revendication 11, caractérisé en ce qu'un quatrième échangeur de chaleur (19) est disposé entre le premier échangeur de chaleur (3) et la première installation de traitement des fumées (6), dont le circuit secondaire est relié au circuit primaire d'un cinquième échangeur de chaleur (20) pour le réchauffement de l'air, et en ce qu'un réchauffeur d'air 11 destiné au réchauffement intermédiaire de l'air de combustion est disposé entre le troisième échangeur de chaleur (15) et le cinquième échangeur de chaleur (20), qui est relié à la sortie d'une installation DeNOx (10) et est chauffé par les gaz épurés s'échappant de l'installation DeNOx (10) (figure 3).

20. Dispositif de mise en oeuvre du procédé selon les revendications 1 à 9, caractérisé en ce qu'il est prévu à la suite d'une chaudière (1) pour les fumées chaudes évacuées, avant l'entrée dans la première installation de traitement des fumées, au moins un système d'échangeurs de chaleur (23 à 26; 27) pour le réchauffement de l'air et au moins un système d'"échangeurs de chaleur (3', 4, 9, 16) pour le réchauffement des fumées, et en ce que la sortie de la première installation de traitement des fumées (6) est reliée à l'installation DeNOx (10) à la sortie de laquelle est raccordé un réchauffeur d'air (11) qui est chauffé par les gaz épurés sortant de l'installation DeNOx (10) (figures 4 et 5).

21. Dispositif selon les revendications 11, 15, 19, 20, caractérisé en ce que la première installation de traitement des fumées (6) est une installation de désulfuration des fumées.

22. Dispositif selon les revendications 11, 14, 15, 19, 20, caractérisé en ce que l'installation DeNOx (10) est regroupée avec le réchauffeur d'air (11) pour former une unité compacte.

23. Dispositif selon les revendications 11, 19, 20, caractérisé en ce que l'installation DeNOx (10) est regroupée avec le deuxième échangeur de chaleur (9) pour former une unité compacte.

24. Dispositif selon les revendications 11, 14, 19, 20, caractérisé en ce que le deuxième échangeur de chaleur (9) est regroupé en série et dans l'ordre avec l'installation DeNOx (10) et le réchauffeur d'air (11) pour former une unité compacte.

25. Dispositif selon les revendications 22 et 24, caractérisé en ce que les surfaces d'"échange de chaleur de l'"échangeur de chaleur (9) et/ou du réchauffeur d'air (11) sont des surfaces de catalyseur.

_Fig.1_

_Fig.4_

_Fig.5_

Fig.2

Fig.3